# FASCICULE DE BREVET EUROPEEN

(11) **EP 2 044 159 B1**
(45) Date de publication et mention de la délivrance du brevet: **10.12.2014**
(21) Numéro de dépôt: 07734987.6
(22) Date de dépôt: 04.07.2007
(51) Int. Cl.: C09C 1/02, B02C 23/06, C08K 3/26, C09D 7/02, D21H 17/63, D21H 17/64, D21H 17/69, C09C 3/10

(54) **AGENT DE DISPERSION ET/OU D'AIDE AU BROYAGE POUR DISPERSION ET SUSPENSION AQUEUSE DE MATIERES MINERALES, DISPERSION ET SUSPENSION OBTENUES ET LEURS UTILISATIONS**
DISPERGIER- UND/ODER MAHLHILFSMITTEL ZUR DISPERGIERUNG UND WÄSSRIGEN SUSPENDIERUNG VON MINERALSTOFFEN, DIE SO ERHALTENE DISPERSION UND SUSPENSION UND DEREN VERWENDUNG
DISPERSING AND/ OR GRINDING AID AGENT FOR DISPERSION AND AQUEOUS SUSPENSION OF MINERAL MATERIALS, DISPERSION AND SUSPENSION OBTAINED AND USE THEREOF

(30) Priorité: 12.07.2006 FR 0606326
(43) Date de publication de la demande: 08.04.2009
(73) Titulaire: COATEX S.A.S., 69730 Genay (FR)
(72) Inventeur: SUAU, Jean-Marc, F-69480 Lucenay (FR); GUERRET, Olivier, F-69890 La Tour De Salvagny (FR); EGRAZ, Jean-Bernard, F-69130 Ecully (FR); MONGOIN, Jacques, F-69650 Quincieux (FR); JACQUEMET, Christian, F-69005 Lyon (FR)
(86) Numéro de dépôt international: PCT/IB2007/001971
(87) Numéro de publication internationale: WO 2008/010055

(56) Documents cités:
- EP-A1- 0 412 027
- EP-A2- 0 850 685
- WO-A-02/49765
- JP-A- 7 316 999

## Description

Le domaine technique général relatif à la présente invention est celui des procédés de dispersion et de broyage de matières minérales en milieu aqueux. La présente invention se rapporte plus précisément à la mise au point d'agents dispersants particuliers, dans le procédé très particulier dit "procédé de broyage à faible extrait sec sans agent dispersant puis de concentration à haut extrait sec en présence d'agent dispersant".

Les dispersions et les suspensions aqueuses de matières minérales tels que le carbonate de calcium, le sulfate de calcium, le kaolin, le dioxyde de titane ou les silices sont utilisées massivement dans l'industrie papetière, notamment pour rendre opaques et imprimables les papiers ou cartons. Pour des raisons économiques évidentes, c'est un enjeu majeur de réussir à utiliser lors du couchage du papier des dispersions ou des suspensions aqueuses de ces matières minérales sous forme manipulables (c'est-à-dire dont la rhéologie permet à l'homme du métier de les manipuler aisément, et notamment de les pomper facilement pour les transférer d'un réservoir à un autre), stables (c'est-à-dire dont la viscosité évolue peu au cours du temps) et avec des extraits sec les plus élevés possibles (l'extrait sec étant défini dans toute la présente Demande comme le pourcentage en poids sec de matières minérales par rapport au poids total de la dispersion ou de la suspension aqueuse considérée).

Les différents procédés de fabrication de ces matières minérales mettent en jeu 3 types d'étapes unitaires qui sont :
- le broyage en milieu aqueux desdites matières minérales, c'est-à-dire une étape de réduction de la granulométrie des particules de matières minérales présentes en dispersion ou en suspension ; cette opération peut avoir lieu en présence d'un agent dit "agent d'aide au broyage", dont la fonction est de faciliter la travail mécanique de broyage desdites particules de matières minérales ;
- la dispersion en milieux aqueux desdites matières minérales, introduites sous forme de poudre sèche, opération qui peut avoir lieu en présence d'un agent dit "agent dispersant" dont la fonction est de permettre d'augmenter l'extrait sec de la dispersion ou de la suspension considérée, tout en lui conservant une rhéologie acceptable notamment en terme de maniabilité ;

- la concentration en milieux aqueux d'une dispersion ou d'une suspension aqueuse de matières minérale, par voie thermique et / ou mécanique, cette opération consistant à éliminer une partie de l'eau contenue dans le milieu en vue d'augmenter l'extrait sec de la dispersion ou de la suspension considérée ; une telle opération peut avoir lieu éventuellement en présence d'un agent dispersant et / ou d'un agent d'aide au broyage.

L'homme du métier, fabriquant de dispersions et de suspensions aqueuses de matières minérales telles que notamment le carbonate de calcium, connaît depuis fort longtemps l'utilisation d'agents de dispersion et / ou d'aide au broyage à base d'homopolymères et / ou de copolymères acryliques, en vue de maintenir lesdites matières minérales en suspension dans l'eau à des concentrations en matière sèche élevées et ce, tout en conférant un caractère stable et manipulable auxdites dispersions ou suspensions aqueuses de matières minérales.

Il connaît ainsi les brevets FR 2 603 042, EP 0 100 947, EP 0 127 388, EP 0 129 329 et EP 0 542 644 qui décrivent l'utilisation pour les fins précitées de tels polymères, totalement ou partiellement neutralisés par divers agents de neutralisation, et présentant un poids moléculaire peu élevé.

Dans le cadre de ces mêmes applications, il connaît également les brevets FR 2 488 814, EP 0 100 948 et EP 0 542 643 qui enseignent l'utilisation de la fraction d'homopolymères et / ou de copolymères acryliques, dont la viscosité spécifique est comprise entre 0,3 et 0,8, telle que mesurée par la méthode commune décrite dans les brevets concernés.

Néanmoins, ces différentes solutions présentent deux inconvénients.

Le premier d'entre eux est le fait qu'elles mettent en oeuvre des quantités d'agent dispersant et / ou d'aide au broyage trop importantes. Or, il est bien connu que la présence d'une quantité trop importante de dispersant peut avoir un effet négatif sur les caractéristiques final du papier fabriqué à partir des dispersions et des suspensions aqueuses de matières minérales contenant lesdits agents : en effet, il est connu par l'homme du métier que de trop grandes doses de dispersant et / ou d'agent d'aide au broyage (notamment s'il est de nature ionique) confèrent au papier une certaine hydrophilie et un caractère ionique fortement marqué, ce qui limite les propriétés finales d'imprimabilité du papier.

Le second problème est lié au fait que les solutions précédemment évoquées ne permettent pas de mettre en oeuvre le procédé particulier suivant :
a) broyage de matières minérales en milieu aqueux sans usage d'agent dispersant et / ou d'agent d'aide au broyage et à faible concentration en matière sèche (l'extrait sec, ou la teneur en poids sec de matière minérale étant alors inférieure à 40 % par rapport au poids total de la suspension),
b) puis concentration mécanique et / ou thermique, en vue d'obtenir une dispersion et / ou une suspension aqueuse de matières minérales ayant une teneur en matière sèche supérieure ou égale à 55 % par rapport au poids total de la dispersion et / ou de la suspension,
un agent dispersant étant introduit entre l'étape a) et l'étape b), et / ou pendant l'étape b), et / ou pendant et après l'étape b).

Dans la suite de la présente Demande, la Demanderesse fera référence à un tel procédé à travers l'expression "procédé de broyage à faible extrait sec sans agent dispersant puis de concentration à haut extrait sec en présence d'agent dispersant".

En vue de résoudre ce problème technique particulier, l'homme du métier connaît le document EP 0 027 996, qui décrit un procédé de fabrication de suspensions aqueuses de matières minérales par une étape de broyage en milieu humide sans agent dispersant, la suspension étant ensuite filtrée, et le gâteau de filtration alors obtenu est séché ou transformé par addition d'un agent dispersant en une suspension de faible viscosité; l'étape de broyage est réalisée à une concentration en matière sèche inférieure à 60 % en poids total de la suspension, et la suspension finale obtenue après ajout de l'agent dispersant possède une teneur en matière sèche au moins supérieure à 80 % de son poids total.

Mais si l'homme du métier ne choisit pas convenablement l'agent dispersant qu'il met en oeuvre, il ne parvient pas à obtenir des teneurs finales en matières sèches suffisamment élevées tout en maintenant un caractère manipulable à la suspension obtenue ; or, rien n'est enseigné à l'homme du métier sur le choix d'agents dispersants particuliers dans ce document EP 0 027 996, ni sur les conditions expérimentales à mettre en oeuvre pour obtenir des teneurs en matière sèche si élevées et des viscosités compatibles avec l'utilisation d'une telle suspension : un tel document ne lui permet donc pas de réaliser le "procédé de broyage à faible extrait sec sans agent dispersant puis de concentration à haut extrait sec en présence d'agent dispersant".

C'est précisément pour cette raison que 3 autres documents, ultérieurs au document EP 0 027 996, ont abordé le même problème technique, mais sous l'angle du choix d'agents de dispersion particuliers, qui permettent de réaliser effectivement le "procédé de broyage à faible extrait sec sans agent dispersant puis de concentration à haut extrait sec en présence d'agent dispersant". Nous verrons par la suite que ces documents ne sont pas dénués d'inconvénients pour l'homme du métier.

L'homme du métier connaît ainsi le document EP 1 147061, qui décrit un procédé caractérisé par les étapes de fabrication d'une suspension aqueuse diluée de carbonate de calcium dont la teneur en poids sec de matières minérales ne dépasse pas 40 %, puis élimination de l'eau pour obtenir un extrait sec compris entre 45 % et 65 %, puis ajout éventuel d'agent dispersant puis, de manière évidente pour l'homme du métier élimination subséquente d'eau sous pression réduite pour augmenter l'extrait sec de 5 % au moins, et enfin traitement mécanique de la suspension obtenue. Ce procédé apparaît complexe à mettre en oeuvre et donc coûteux, de part le nombre d'étapes plus important et la nécessité de disposer d'un appareillage permettant de travailler sous pression réduite.

L'homme du métier connaît aussi le document WO 01/048093, qui enseigne l'utilisation d'homopolymères et de copolymères de l'acide acrylique avec différents monomères hydrosolubles allyliques et vinyliques, d'un poids moléculaire correspondant à un indice de viscosité allant de 0,08 à 0,80 selon la méthode décrite dans la demande de brevet concernée.

Il connaît enfin le brevet EP 0 850 685 qui lui enseigne une autre solution, consistant en l'utilisation de copolymères connus par l'homme du métier qui sont des copolymères du type acrylique : maléique, présentant un rapport molaire entre ces deux unités compris entre 10:1 et 0,5:1, et une masse moléculaire moyenne comprise entre 1 000 et 100 000 g / mole, utilisation de copolymères du type acrylique : maléique qui était déjà connue de part des documents antérieurs.

Par conséquent, la solution proposée dans le document EP 1 147 061 apparaît trop complexe et onéreuse. En ce qui concerne les solutions proposées dans les documents WO 01/048093 et EP 0 850 685, si elles permettent de réaliser le procédé dit de "broyage à faible extrait sec sans agent dispersant puis de concentration à haut extrait sec en présence d'agent dispersant", elles conservent toutefois l'inconvénient de mettre en oeuvre des quantités d'agents dispersants trop importantes.

EP 0 412 027 et JP07316999 décrivent des agents dispersants.

EP 0 412 027 décrit l'utilisation d'un polymère comprenant un monomère éthylénique à fonction monocarboxylique, un monomère éthylénique à fonction phosphatée ou phosphonée et un monomère éthylénique à fonction dicarboxylique. Le copolymère peut posséder des monomères acide acrylique et anhydride maléique dans un rapport 1,6 à 1.

JP07316999 décrit l'utilisation d'un agent comprenant un sel hydrosoluble d'un copolymère obtenu par copolymérisation de l'acide acrylique avec l'anhydride maléique dans un rapport molaire allant de 50/50 à 95/5, en particulier de 78/22 à 90/10 en présence d'un persulfate et d'un agent réducteur.

Ces agents dispersants ne sont pas mis en oeuvre dans un procédé de broyage à faible extrait sec sans agent dispersant puis de concentration à haut extrait sec en présence d'agent dispersant.

Aussi, en vue de fabriquer des dispersions et / ou des suspensions aqueuses de matières minérales à travers le procédé particulier dit de "broyage à faible extrait sec sans agent dispersant puis de concentration à haut extrait sec en présence d'agent dispersant", la Demanderesse a mis au point l'utilisation, comme agent de dispersion et / ou d'aide au broyage, de polymères contenant au moins un monomère choisi parmi l'acide acrylique ou l'acide méthacrylique ou leurs mélanges et au moins un monomère qui est l'anhydride maléique, ledit polymère étant caractérisé en ce que le ratio molaire r (acide acrylique et / ou méthacrylique) : (anhydride maléique) est strictement compris entre 1,9:1 et 1:1.

Cette utilisation permet d'obtenir des dispersions et / ou des suspensions aqueuses de matières minérales présentant :
- un extrait sec élevé, c'est-à-dire un extrait sec supérieur à 60 % du poids total de ladite dispersion ou suspension,
- un caractère manipulable, c'est-à-dire une viscosité Brookfield™ inférieure à 500 mPa.s, mesurée après la fabrication de ladite dispersion ou suspension, à 100 tours / minute, et à 25°C,
- un caractère stable, c'est-à-dire dont la viscosité Brookfield™ mesurée à 100 tours / minute, et à 25°C, évolue peu au cours du temps,
et ce, tout en utilisant une quantité d'agent dispersant et / ou d'aide au broyage, inférieure ou égale à celle mise en oeuvre dans l'art antérieur, notamment dans les documents EP 0 850 685 et WO 01/048093. On parvient ainsi à obtenir pour les dispersions ou les suspensions de matières minérales les mêmes caractéristiques que celles énoncées ci-dessus, mais avec une demande en dispersant inférieure à l'art antérieur (ceci peut également se traduire par des caractéristiques améliorées en terme d'extrait sec, de stabilité et de viscosité, pour une demande en dispersant identique à celle mise en oeuvre dans les solutions proposées par l'art antérieur).

Cette solution apparaît d'autant plus remarquable que, le document EP 0 850 685 proposant déjà une solution à la mise en suspension du carbonate de calcium selon le procédé dit de "broyage à faible extrait sec sans agent dispersant puis de concentration à haut extrait sec en présence d'agent dispersant", avec des copolymères du type acrylique : maléique présentant un rapport molaire entre ces deux unités compris entre 10:1 et 0,5:1, les auteurs de ce document n'avaient pas su remarquer qu'un rapport molaire particulier et compris strictement entre 1,9:1 et 1:1 permettait de réduire la quantité de polymères mis en oeuvre dans le cas de copolymères (acide acrylique et / ou méthacrylique) : (anhydride maléique), et donc d'améliorer les propriétés finales d'imprimabilité du papier.

Ce rapport molaire (en acide (méth)acrylique: anhydride maléique) selon la présente invention est donc défini à travers un intervalle bien plus étroit que celui révélé dans le document EP 0 850 685 (10:1 à 0,5:1).

De plus, il est éloigné de la zone préférentielle dévoilée dans le document EP 0 850 685 et qui est comprise entre 9:1 et 3:1, tel qu'indiqué dans la revendication 9 de ce document. Il faut noter que cette revendication 9 relie ce domaine préférentiel à l'obtention de viscosités améliorées (abaissées) pour les suspensions de matières minérales résultantes, ce qui fait aussi partie du problème technique résolu par la présente Demande.

Enfin, le ratio identifié dans la présente Demande apparaît parfaitement motivé au sens où il conduit à un effet technique remarquable sur les suspensions aqueuses de matières minérales obtenues, à savoir diminution de la demande en dispersant tout en maintenant la viscosité Brookfield, l'extrait sec, et la stabilité de ces suspensions, ou amélioration de ces propriétés pour une demande en dispersant égale à celle de l'art antérieur. Ce résultat est d'autant plus surprenant que les auteurs du document EP 0 850 685 avaient identifié, pour au moins un problème technique commun (l'abaissement de la viscosité), un intervalle de ratio monomérique très éloigné, selon leur revendication 9.

De plus, la Demanderesse a aussi su remarquer que ce ratio choisi entre 1,9:1 et 1:1 très préférentiellement 1,5:1 et 1,3:1, permettait d'obtenir des propriétés particulièrement améliorées en terme d'extrait sec, de viscosité Brookfield™ faible et stable dans le temps, pour les dispersions et / ou les suspensions aqueuses de matières minérales qu'ils permettent de fabriquer : ces propriétés sont clairement illustrées dans les exemples de la présente Demande.

Aussi, un premier objet de l'invention est l'utilisation dans un procédé de fabrication de dispersion et / ou de suspension aqueuse de matières minérales comportant :
a) une étape de broyage de matières minérales en milieu aqueux sans usage d'agent dispersant et / ou d'agent d'aide au broyage et ayant un pourcentage en poids sec de matières minérales inférieur à 50 %, préférentiellement à 40 %, très préférentiellement à 35 % de son poids,
b) puis une étape de concentration mécanique et / ou thermique, en vue d'obtenir des dispersions et / ou des suspensions aqueuses de matières minérales ayant un pourcentage en poids sec de matières minérales supérieur à 55 %, préférentiellement supérieur à 60 %, très préférentiellement supérieur à 65 % de son poids,
d'au moins un polymère contenant au moins un monomère choisi parmi l'acide acrylique ou l'acide méthacrylique ou leurs mélanges et au moins un monomère qui est l'anhydride maléique, ledit polymère étant caractérisé en ce que le ratio molaire r (acide acrylique et / ou méthacrylique) : (anhydride maléique) est strictement compris entre 1,9:1 et 1:1, et en ce que ledit polymère est mis en oeuvre comme agent dispersant et est introduit entre l'étape a) et l'étape b), et / ou pendant l'étape b), et / ou pendant et après l'étape b).

Cette utilisation est aussi caractérisée en ce que le ratio molaire r (acide acrylique et / ou méthacrylique) : (anhydride maléique) est compris préférentiellement entre 1,5:1 et 1,3:1.

Cette utilisation est aussi caractérisée en ce que ledit polymère contient éventuellement au moins un autre monomère, qui est un monomère vinylique hydrosoluble non acide, choisi préférentiellement parmi les (méth)acrylamides éventuellement substituées, les (méth)acrylates de polyéthylène glycols, les vinyl éther de polyalkylène glycols, les vinyl sulfoniques, les (méth)acrylates de polyalkylène glycol phosphatés, la vinyl pyrrolidone et leurs mélanges.

Cette utilisation est aussi caractérisée en ce que ledit polymère contient de 0 à 50 % en mole, par rapport au nombre total de moles de monomères qui le constituent, d'un monomère vinylique hydrosoluble non acide, choisi préférentiellement parmi les (méth)acrylamides éventuellement substituées, les (méth)acrylates de polyéthylène glycols, les vinyl éther de polyalkylène glycols, les vinyl sulfoniques, les (méth)acrylates de polyalkylène glycol phosphatés, la vinyl pyrrolidone et leurs mélanges.

Cette utilisation est aussi caractérisée en ce que ledit polymère présente un poids moléculaire compris entre 3 000 g/mole et 150 000 g/mole, préférentiellement entre 7 000 g/mole à 30 000 g/mole, très préférentiellement entre 10 000 g/mole à 20 000 g/mole.

La Demanderesse indique que, dans la présente Demande, les poids moléculaires tels qu'ils sont mesurés et revendiqués sont déterminés par une méthode de chromatographie d'exclusion stérique (CES), selon la méthode suivante.

Une prise d'essai de la solution de polymère correspondant à 90 mg de matière sèche est introduite dans un flacon de 10 ml.

Il est ajouté de la phase mobile, additionnée de 0,04 % de THF, jusqu'à une masse totale de 10 g.

La composition de cette phase mobile est la suivante : NaNO₃: 0.2 mole/L, CH₃COOH : 0.5 mole/L, acétonitrile 5 % volume.

La chaîne de CES est composée d'une pompe isocratique de type Waters™ 510, dont le débit est réglé à 0.8 mL/min, d'un passeur d'échantillons Waters 717+, d'un four contenant une précolonne de type "Guard Column Ultrahydrogel Waters™", suivie d'un jeu de colonnes de 7.8 mm de diamètre interne et 30 cm de longueur de type "Ultrahydrogel Waters™", dont les porosités nominales sont, dans l'ordre de leur connexion : 2000, 1000, 500 et 250 Å.

La détection est assurée par un réfractomètre différentiel de type Waters™ 410.

La température du four et du détecteur est régulée à 35°C.

L'acquisition et le traitement du chromatogramme sont effectués par l'utilisation du logiciel PSS WinGPC Scientific v 4.02.

La CES est étalonnée par une série d'étalons polyacrylate de sodium fourni par Polymer Standard Service sous les références PAA 18 K, PAA 8K, PAA 5K, PAA 4K, PAA 3K. La courbe d'étalonnage est de type linéaire et prend en compte la correction obtenue grâce au marqueur de débit (THF).

Cette utilisation est aussi caractérisée en ce que ledit polymère est neutralisé, totalement ou partiellement, par un agent de neutralisation choisi parmi les hydroxydes et / ou oxydes de calcium ou de magnésium, les hydroxydes de sodium, de potassium, de lithium ou l'ammoniaque, ou leurs mélanges, très préférentiellement parmi les hydroxydes et / ou oxydes de calcium, les hydroxydes de sodium et de potassium ou l'ammoniaque, ou leurs mélanges.

Cette utilisation est aussi caractérisée en ce que ledit polymère est mis en oeuvre à raison de 0,1 % à 1,5 %, préférentiellement de 0,3 % à 1,0 % en poids sec dudit polymère par rapport au poids sec de matières minérales.

Cette utilisation est aussi caractérisée en ce que ledit polymère est dilué en solution dans l'eau, cette solution contenant entre 20 % et 60 %, préférentiellement entre 30 % et 50 % en poids sec de polymère par rapport à son poids total.

Cette utilisation est aussi caractérisée en ce que lesdites matières minérales sont choisies parmi le carbonate de calcium naturel ou synthétique, les dolomies, le kaolin, le talc, le gypse, la chaux, la magnésie, le dioxyde de titane, le blanc satin, le trioxyde d'aluminium ou encore le trihydroxyde d'aluminium, les silices, le mica et le mélange de ces charges entre elles, comme les mélanges talc-carbonate de calcium, carbonate de calcium-kaolin, ou encore les mélanges de carbonate de calcium avec le trihydroxyde d'aluminium ou le trioxyde d'aluminium, ou encore les mélanges avec des fibres synthétiques ou naturelles ou encore les co-structures des minéraux comme les co-structures talc-carbonate de calcium ou talc-dioxyde de titane, ou leurs mélanges, et en ce que lesdites matières minérales sont choisies préférentiellement parmi le carbonate de calcium naturel ou synthétique ou le talc ou leurs mélanges, et en ce qu'elles sont très préférentiellement choisies parmi le carbonate de calcium naturel ou synthétique ou leurs mélanges.

Une dispersion ou une suspension aqueuse de matières minérales, contenant au moins un polymère contenant au moins un monomère choisi parmi l'acide acrylique ou l'acide méthacrylique ou leurs mélanges et au moins un monomère qui est l'anhydride maléique, dans laquelle ledit polymère présente un ratio molaire r (acide acrylique et / ou méthacrylique) : (anhydride maléique) strictement compris entre 2:1 et 0,1:1 est décrite.

Cette dispersion ou suspension est aussi caractérisée en ce que le ratio molaire r (acide acrylique et / ou méthacrylique) : (anhydride maléique) est compris préférentiellement entre 1,9:1 et 1:1, très préférentiellement entre 1,5:1 et 1,3:1.

Cette dispersion ou suspension est aussi caractérisée en ce que ledit polymère contient éventuellement au moins un autre monomère, qui est un monomère vinylique hydrosoluble non acide, choisi préférentiellement parmi les (méth)acrylamides éventuellement substituées, les (méth)acrylates de polyéthylène glycols, les vinyl éther de polyalkylène glycols, les vinyl sulfoniques, les (méth)acrylates de polyalkylène glycol phosphatés, la vinyl pyrrolidone et leurs mélanges.

Cette dispersion ou suspension est aussi caractérisée en ce que ledit polymère contient de 0 à 50 % en mole, par rapport au nombre total de moles de monomères qui le constituent, d'un monomère vinylique hydrosoluble non acide, choisi préférentiellement parmi les (méth)acrylamides éventuellement substituées, les (méth)acrylates de polyéthylène glycols, les vinyl éther de polyalkylène glycols, les vinyl sulfoniques, les (méth)acrylates de polyalkylène glycol phosphatés, la vinyl pyrrolidone et leurs mélanges.

Cette dispersion ou suspension est aussi caractérisée en ce que ledit polymère présente un poids moléculaire compris entre 3 000 g/mole et 150 000 g/mole, préférentiellement entre
7 000 à 30 000 g/mole, très préférentiellement entre 10 000 à 20 000 g/mole.

Cette dispersion ou suspension est aussi caractérisée en ce que ledit polymère est neutralisé, totalement ou partiellement, par un agent de neutralisation choisi parmi les hydroxydes et / ou oxydes de calcium, ou de magnésium, les hydroxydes de sodium, de potassium, de lithium ou l'ammoniaque, ou leurs mélanges, très préférentiellement parmi les hydroxydes et / ou oxydes de calcium, les hydroxydes de sodium et de potassium ou l'ammoniaque, ou leurs mélanges.

Cette dispersion ou suspension est aussi caractérisée en ce qu'elle contient de 0,1 % à 1,5 %, préférentiellement de 0,3 % à 1,0 % en poids sec dudit polymère par rapport au poids sec de matières minérales.

Cette dispersion ou suspension est aussi caractérisée en ce que lesdites matières minérales sont choisies parmi le carbonate de calcium naturel ou synthétique, les dolomies, le kaolin, le talc, le gypse, la chaux, la magnésie, le dioxyde de titane, le blanc satin, le trioxyde d'aluminium ou encore le trihydroxyde d'aluminium, les silices, le mica et le mélange de ces charges entre elles, comme les mélanges talc-carbonate de calcium, carbonate de calcium-kaolin, ou encore les mélanges de carbonate de calcium avec le trihydroxyde d'aluminium ou le trioxyde d'aluminium, ou encore les mélanges avec des fibres synthétiques ou naturelles ou encore les co-structures des minéraux comme les co-structures talc-carbonate de calcium ou talc-dioxyde de titane, ou leurs mélanges, et en ce que lesdites matières minérales sont choisies préférentiellement parmi le carbonate de calcium naturel ou synthétique ou le talc ou leurs mélanges, et en ce qu'elles sont très préférentiellement choisies parmi le carbonate de calcium naturel ou synthétique ou leurs mélanges.

Ces dispersions ou suspensions aqueuses de matières minérales sont utilisées dans la fabrication de plastiques et de caoutchoucs ou dans la fabrication de formulations aqueuses contenant des matières minérales. La Demanderesse précise au sujet des matières plastiques, que ce sont les dispersions ou suspensions aqueuses de matières minérales qui, une fois séchées, entrent dans la composition desdites formulations plastiques.

Ces dispersions ou suspensions aqueuses de matières minérales sont utilisées dans la fabrication du papier et plus particulièrement dans la fabrication de la feuille de papier et dans la fabrication de sauces de couchage destinées à la production d'une feuille de papier couchée, ainsi que dans la fabrication de peintures.

### EXEMPLES

### Exemple 1

Cet exemple illustre l'utilisation selon l'invention des polymères décrits dans la présente Demande et de polymères décrits dans l'art antérieur, comme agents dispersants mis en oeuvre dans le procédé dit procédé de broyage à faible extrait sec sans agent dispersant puis de concentration à haut extrait sec en présence d'agent dispersant.

Dans chacun des essais n° 1 à n° 16, un carbonate grossier est mis en suspension dans l'eau et cette suspension agitée pour prévenir toute sédimentation, circule dans un broyeur du type Dyno-Mill™ à cylindre fixe et impulseur tournant, dont le corps broyant est constitué des billes de corindon de diamètre compris entre 0,6 mm et 1 mm. Le volume total occupé par le corps broyant est de 1,150 litres tandis que sa masse est de 2,9 kg. La chambre de broyage a un volume de 1,4 litres. La vitesse circonférentielle est de 10 m/s. La suspension de carbonate de calcium est recyclée dans le broyeur jusqu'à l'obtention de la granulométrie désirée à raison de 18 litres/h.

On détermine la granulométrie des suspensions à l'aide d'un granulomètre Sedigraph™ 5100 de la société Micromeritics™.

Le carbonate de calcium est alors concentré par tout moyen bien connu de l'homme de métier jusqu'à l'obtention de la concentration requise pour l'application.

A ce stade de la fabrication, le carbonate de calcium se présente sous la forme d'un gâteau solide ou pâteux qu'il est indispensable de redisperser afin qu'il devienne manipulable et ce, par mise en oeuvre d'un polymère selon l'invention ou selon l'art antérieur.

Le gâteau de filtration de carbonate de calcium, constitué de 67,5 % en poids de carbonate de calcium et dont la granulométrie est telle que 75 % en poids des particules ont un diamètre inférieur à 1 micron, est ensuite dispersé au moyen d'un polymère selon l'art antérieur ou selon l'invention.

### Essai n° 1

Cet essai illustre l'invention et met en oeuvre 0,5 % en poids sec, par rapport au poids sec de carbonate de calcium, d'un polymère :
- constitué d'acide acrylique et d'anhydride maléique dans un rapport molaire r égal à 1,36:1 ;
- de poids moléculaire égal à 19 500 g/mole ;
- totalement neutralisé par l'hydroxyde de sodium. ,

### Essai n° 2

Cet essai illustre l'invention et met en oeuvre 0,5 % en poids sec, par rapport au poids sec de carbonate de calcium, d'un polymère:
- constitué d'acide acrylique et d'anhydride maléique dans un rapport molaire r égal à 1,87:1 ;
- de poids moléculaire égal à 13 325 g/mole ;
- totalement neutralisé par l'hydroxyde de sodium.

### Essai n° 3

Cet essai illustre l'invention et met en oeuvre 0,5 % en poids sec, par rapport au poids sec de carbonate de calcium, d'un polymère :
- constitué d'acide acrylique et d'anhydride maléique dans un rapport molaire r égal à 1,82:1, et contenant également de l'acrylamide dans un rapport massique (acide acrylique / anhydride maléique / acrylamide) égal à 43 / 32 / 25 ;
- de poids moléculaire égal à 21 020 g/mole;
- totalement neutralisé par l'hydroxyde de sodium.

### Essai n° 4

Cet essai illustre l'invention et met en oeuvre 0,5 % en poids sec, par rapport au poids sec de carbonate de calcium, d'un polymère :
- constitué d'acide acrylique et d'anhydride maléique dans un rapport molaire r égal à 1,87:1, et contenant également de l'acrylamide dans un rapport massique (acide acrylique / anhydride maléique / acrylamide) égal à 55 / 40 / 5;
- de poids moléculaire égal à 15 860 g/mole ;
- totalement neutralisé par l'hydroxyde de sodium.

### Essai n° 5

Cet essai illustre l'art antérieur et met en oeuvre 0,5 % en poids sec, par rapport au poids sec de carbonate de calcium, d'un polymère :
- constitué d'acide acrylique et d'anhydride maléique dans un rapport molaire r égal à 3,17:1 ;
- de poids moléculaire égal à 15 700 g/mole ;
- totalement neutralisé par l'hydroxyde de sodium.

### Essai n° 6

Cet essai illustre l'art antérieur et met en oeuvre 0,5 % en poids sec, par rapport au poids sec de carbonate de calcium, d'un polymère :
- constitué d'acide acrylique et d'anhydride maléique dans un rapport molaire r égal à 5,2:1 ;
- de poids moléculaire égal à 16 700 g/mole ;
- totalement neutralisé par l'hydroxyde de sodium.

### Essai n° 7

Cet essai illustre l'art antérieur et met en oeuvre 0,5 % en poids sec, par rapport au poids sec de carbonate de calcium, d'un homopolymère de l'acide acrylique de poids moléculaire égal à 58 000 g/mole.

La viscosité Brookfield™ de la suspension est mesurée à l'aide d'un viscosimètre Brookfïeld™ de type RVT à une température de 25°C et à une vitesse de rotation de 100 tours par minute avec le mobile adéquat.

La lecture de la viscosité est effectuée après une minute de rotation.

On obtient ainsi la viscosité initiale de la suspension mesurée à l'instant à t=0, et notée µₜ₌₀.

Après un temps de repos de 8 jours de ladite suspension, et après agitation mécanique de ladite suspension pendant 5 minutes au moyen d'un agitateur de laboratoire, la viscosité Brookfield™ de ladite suspension est à nouveau mesurée à l'aide d'un viscosimètre Brookfield™ de type RVT à une température de 25°C et à une vitesse de rotation de 100 tours par minute avec le mobile adéquat, et notée µₜ₌₈.

Ces valeurs de la viscosité Brookfield™ sont reportées dans le tableau 1.

**Tableau 1**

| **Essai n°** | **µₜ₌₀ (mPa.s)** | **µₜ₌₈ (mPa.s)** |
|---|---|---|
| | **100 t/min** | **100 t/min** |
| 1 (invention) | 160 | 350 |
| 2 (invention) | 220 | 400 |
| 3 (invention) | 200 | 380 |
| 4 (invention) | 240 | 460 |
| 5 (art antérieur) | 300 | 700 |
| 6 (art antérieur) | 240 | 600 |
| 7 (art antérieur) | 250 | 610 |

La lecture du tableau 1 démontre que la mise en oeuvre des dispersants selon l'invention permet d'obtenir, avec la même quantité de dispersant que l'art antérieur, des suspensions de carbonate de calcium ayant le même extrait sec (soit 67,5 % de leurs poids), mais des viscosités Brookfield™ initiales plus faibles, tout en conférant auxdites suspensions une bonne stabilité dans le temps.

La lecture de ce tableau démontre donc clairement l'avantage technique apporté par l'utilisation des polymères de la présente invention (notamment à travers le choix du rapport molaire r d'acide acrylique et d'anhydride maléique) et ce, pour les propriétés énumérées ci-dessus.

### Exemple 2

Cet exemple illustre l'utilisation selon l'invention des polymères décrits dans la présente Demande et de polymères décrits dans l'art antérieur, comme agents dispersants mis en oeuvre dans le procédé dit procédé de broyage à faible extrait sec sans agent dispersant puis de concentration à haut extrait sec en présence d'agent dispersant.

Pour chacun des essais, le protocole de fabrication de la suspension aqueuse de carbonate de calcium est identique à celui décrit dans l'exemple 1, à la différence près que le gâteau de filtration de carbonate de calcium est constitué de 65 % en poids de carbonate de calcium et dont la granulométrie est telle que 80 % en poids des particules ont un diamètre inférieur à 1 micron.

### Essai n° 8

Cet essai illustre l'invention et met en oeuvre 0,45 % en poids sec, par rapport au poids sec de carbonate de calcium, d'un polymère :
- constitué d'acide acrylique et d'anhydride maléique dans un rapport molaire r égal à 1,36:1 ;
- de poids moléculaire égal à 19 500 g/mole ;
- totalement neutralisé par l'hydroxyde de sodium.

### Essai n° 9

Cet essai illustre l'invention et met en oeuvre 0,45 % en poids sec, par rapport au poids sec de carbonate de calcium, d'un polymère :
- constitué d'acide acrylique et d'anhydride maléique dans un rapport molaire r égal à 1,55:1 ;
- de poids moléculaire égal à 19 500 g/mole ;
- totalement neutralisé par l'hydroxyde de sodium.

### Essai n° 10

Cet essai illustre l'invention et met en oeuvre 0,45 % en poids sec, par rapport au poids sec de carbonate de calcium, d'un polymère :
- constitué d'acide acrylique et d'anhydride maléique dans un rapport molaire r égal à 1,80:1 ;
- de poids moléculaire égal à 19 500 g/mole ;
- totalement neutralisé par l'hydroxyde de sodium.

### Essai n° 11

Cet essai illustre l'invention et met en oeuvre 0,45 % en poids sec, par rapport au poids sec de carbonate de calcium, d'un polymère :
- constitué d'acide acrylique et d'anhydride maléique dans un rapport molaire r égal à 1,24:1 ;
- de poids moléculaire égal à 19 500 g/mole ;
- totalement neutralisé par l'hydroxyde de sodium.

### Essai n° 12

Cet essai illustre l'invention et met en oeuvre 0,45 % en poids sec, par rapport au poids sec de carbonate de calcium, d'un polymère :
- constitué d'acide acrylique et d'anhydride maléique dans un rapport molaire r égal à 1,20:1 ;
- de poids moléculaire égal à 19 500 g/mole ;
- totalement neutralisé par l'hydroxyde de sodium.

### Essai n° 13

Cet essai illustre l'invention et met en oeuvre 0,45 % en poids sec, par rapport au poids sec de carbonate de calcium, d'un polymère:
- constitué d'acide acrylique et d'anhydride maléique dans un rapport molaire r égal à 1,36:1 ;
- de poids moléculaire égal à 19 500 g/mole ;
- dont 60 % en mole des fonctions acides sont neutralisées par l'hydroxyde de sodium et 40 % en mole sont neutralisées par l'hydroxyde de lithium.

### Essai n° 14

Cet essai illustre l'invention et met en oeuvre 0,45 % en poids sec, par rapport au poids sec de carbonate de calcium, d'un polymère :
- constitué d'acide acrylique et d'anhydride maléique dans un rapport molaire r égal à 1,36:1 ;
- de poids moléculaire égal à 19 500 g/mole ;
- dont 60 % en mole des fonctions acides sont neutralisées par l'hydroxyde de sodium et 40 % en mole sont neutralisées par l'hydroxyde de potassium.

### Essai n° 15

Cet essai illustre l'invention et met en oeuvre 0,45 % en poids sec, par rapport au poids sec de carbonate de calcium, d'un polymère :
- constitué d'acide acrylique et d'anhydride maléique dans un rapport molaire r égal à 1,36:1 ;
- de poids moléculaire égal à 19 500 g/mole ;
- dont 60 % en mole des fonctions acides sont neutralisées par l'hydroxyde de sodium et 40 % en mole sont neutralisées par l'ammoniaque.

### Essai n° 16

Cet essai illustre l'invention et met en oeuvre 0,45 % en poids sec, par rapport au poids sec de carbonate de calcium, d'un polymère :
- constitué d'acide acrylique et d'anhydride maléique dans un rapport molaire r égal à 1,36:1 ;
- de poids moléculaire égal à 19 500 g/mole ;
- dont 60 % en mole des fonctions acides sont neutralisées par l'hydroxyde de sodium et 40 % en mole sont neutralisées par l'hydroxyde de calcium.

### Essai n° 17

Cet essai illustre l'invention et met en oeuvre 0,45 % en poids sec, par rapport au poids sec de carbonate de calcium, d'un polymère :
- constitué d'acide acrylique, d'anhydride maléique (dans un rapport molaire r égal à 1,36:1) et de 60 % en poids (par rapport au poids total des monomères) d'acide acrylamido 2-méthyl propane sulfonique ;
- de poids moléculaire égal à 19 500 g/mole ;
- totalement neutralisé par l'hydroxyde de sodium.

### Essai n° 18

Cet essai illustre l'invention et met en oeuvre 0,45 % en poids sec, par rapport au poids sec de carbonate de calcium, d'un polymère :
- constitué d'acide acrylique, d'anhydride maléique (dans un rapport molaire r égal à 1,36:1) et de 10 % en poids (par rapport au poids total des monomères) de méthacrylate de méthoxy polyéthylène glycol de poids moléculaire égal à 2000 g/mole ;
- de poids moléculaire égal à 19 500 g/mole ;
- totalement neutralisé par l'hydroxyde de sodium.

### Essai n° 19

Cet essai illustre l'art antérieur et met en oeuvre 0,45 % en poids sec, par rapport au poids sec de carbonate de calcium, d'un polymère :
- constitué d'acide acrylique et d'anhydride maléique dans un rapport molaire r égal à 3,17:1 ;
- de poids moléculaire égal à 15 700 g/mole ;
- totalement neutralisé par l'hydroxyde de sodium.

### Essai n° 20

Cet essai illustre l'art antérieur et met en oeuvre 0,5 % en poids sec, par rapport au poids sec de carbonate de calcium, d'un polymère :
- constitué d'acide acrylique et d'anhydride maléique dans un rapport molaire r égal à 5,2:1 ;
- de poids moléculaire égal à 16 700 g/mole ;
- totalement neutralisé par l'hydroxyde de sodium.

### Essai n° 21

Cet essai illustre l'art antérieur et met en oeuvre 0,45 % en poids sec, par rapport au poids sec de carbonate de calcium, d'un homopolymère de l'acide acrylique de poids moléculaire égal à 58 000 g/mole.

La viscosité Brookfield™ de la suspension est mesurée à l'aide d'un viscosimètre Brookfield™ de type RVT à une température de 25°C et à une vitesse de rotation de 100 tours par minute avec le mobile adéquat.

La lecture de la viscosité est effectuée après une minute de rotation.

On obtient ainsi la viscosité initiale de la suspension mesurée à l'instant à t=0, et notée µₜ₌₀.

Après un temps de repos de 8 jours de ladite suspension, et après agitation mécanique de ladite suspension pendant 5 minutes au moyen d'un agitateur de laboratoire, la viscosité Brookfield™ de ladite suspension est à nouveau mesurée à l'aide d'un viscosimètre Brookfield™ de type RVT à une température de 25°C et à une vitesse de rotation de 100 tours par minute avec le mobile adéquat, et notée µₜ₌₈.

Ces valeurs de la viscosité Brookfield™ sont reportées dans le tableau 2.

**Tableau 2**

| **Essai n°** | **µₜ₌₀ (mPa.s)** | **µₜ₌₈ (mPa.s)** |
|---|---|---|
| | **100 t/min** | **100 t/min** |
| 8 (invention) | 205 | 145 |
| 9 (invention) | 295 | 310 |
| 10 (invention) | 330 | 350 |
| 11 (invention) | 310 | 330 |
| 12 (invention) | 335 | 365 |
| 13 (invention) | 130 | 385 |
| 14 (invention) | 90 | 95 |
| 15 (invention) | 120 | 135 |
| 16 (invention) | 110 | 135 |
| 17 (invention) | 125 | 145 |
| 18 (invention) | 130 | 150 |
| 19 (art antérieur) | 400 | 620 |
| 20 (art antérieur) | 370 | 530 |
| 21 (art antérieur) | 950 | 1020 |

La lecture du tableau 2 démontre que la mise en oeuvre des dispersants selon l'invention permet d'obtenir, avec la même quantité de dispersant que l'art antérieur, des suspensions de carbonate de calcium ayant le même extrait sec (soit 65 % de leurs poids), mais des viscosités Brookfield™ initiales plus faibles, tout en conférant auxdites suspensions une bonne stabilité dans le temps.

La lecture de ce tableau démontre donc clairement l'avantage technique apporté par l'utilisation des polymères de la présente invention et ce, pour les propriétés énumérées ci-dessus.

De plus, la viscosité Brookfield™ (à t=0) la plus faible est obtenue pour les essais n° 13 à 18, qui correspondent à un rapport r égal à 1,36, valeur comprise dans l'intervalle très préférentiel que la Demanderesse a su identifier au cours de ses travaux.

### Exemple 3

Cet exemple illustre l'utilisation selon l'invention des polymères décrits dans la présente Demande et de polymères décrits dans l'art antérieur, comme agents dispersants mis en oeuvre dans le procédé dit procédé de broyage à faible extrait sec sans agent dispersant puis de concentration à haut extrait sec en présence d'agent dispersant.

Cet exemple illustre notamment la réduction de la demande en dispersant dans le cas de l'invention.

Un gâteau de filtration identique à celui décrit lors de l'exemple 2 est dispersé avec des doses croissantes de dispersant et les viscosités de la suspension sont mesurées à l'instant t = 0 à l'aide d'un viscosimètre Brookfield™ de type RVT à une température de 25°C et à 100 tours par minute avec le mobile adéquat et notées µₜ₌₀. La lecture de la viscosité est effectuée après une minute de rotation.

L'essai n° 22 est réalisé avec le polymère de l'invention mis en oeuvre pour l'essai n° 1. L'essai n° 23 est réalisé avec le polymère de l'art antérieur mis en oeuvre pour l'essai n° 19.

Les résultats sont reportés dans le tableau 3.

**Tableau 3**

| | **essai n° 22 (invention)** | **essai n° 23 (art antérieur)** |
|---|---|---|
| **quantité de dispersant* (%)** | **µₜ₌₀ (mPa.s) 100 t/min** | **µₜ₌₀ (mPa.s) 100 t/min** |
| 0,2 | 900 | 1480 |
| 0,3 | 620 | 1050 |
| 0,4 | 350 | 800 |
| 0,5 | 260 | 640 |
| 1 | 150 | 200 |

| | | |
|---|---|---|
| * quantité exprimée en pourcentage en poids sec de dispersant par rapport au poids sec de carbonate de calcium | | |

La lecture du tableau 3 démontre que, pour la même quantité d'agent dispersant mis en oeuvre, on obtient des viscosités Brookfield™ plus faibles dans le cas de l'invention : ceci illustre clairement l'avantage technique apporté par l'utilisation des polymères selon la présente invention, par rapport aux polymères de l'art antérieur.

## Revendications

1. Utilisation dans un procédé de fabrication de dispersion et / ou de suspension aqueuse de matières minérales comportant :
a) une étape de broyage de matières minérales en milieu aqueux sans usage d'agent dispersant et / ou d'agent d'aide au broyage et ayant un pourcentage en poids sec de matières minérales inférieur à 50 %, préférentiellement à 40 %, très préférentiellement à 35 % de son poids,
b) puis une étape de concentration mécanique et / ou thermique, en vue d'obtenir des dispersions et / ou des suspensions aqueuses de matières minérales ayant un pourcentage en poids sec de matières minérales supérieur à 55 %, préférentiellement supérieur à 60 %, très préférentiellement supérieur à 65 % de son poids,
d'au moins un polymère contenant au moins un monomère choisi parmi l'acide acrylique ou l'acide méthacrylique ou leurs mélanges et au moins un monomère qui est l'anhydride maléique, ledit polymère étant **caractérisé en ce que** le ratio molaire r (acide acrylique et / ou méthacrylique) : (anhydride maléique) est strictement compris entre 1,9:1 et 1:1, et **en ce que** ledit polymère est mis en oeuvre comme agent dispersant et est introduit entre l'étape a) et l'étape b), et/ ou pendant l'étape b), et / ou pendant et après l'étape b).

2. Utilisation, selon la revendication 1, **caractérisée en ce que** le ratio molaire r (acide acrylique et / ou méthacrylique) : (anhydride maléique) est compris entre 1,5:1 et 1,3:1.

3. Utilisation, selon l'une des revendications 1 ou 2, **caractérisée en ce que** ledit polymère contient éventuellement au moins un autre monomère, qui est un monomère vinylique hydrosoluble non acide, choisi préférentiellement parmi les (méth)acrylamides éventuellement substituées, les (méth)acrylates de polyéthylène glycols, les vinyl éther de polyalkylène glycols, les vinyl sulfoniques, les (méth)acrylates de polyalkylène glycol phosphatés, la vinyl pyrrolidone et leurs mélanges.

4. Utilisation, selon la revendication 3, **caractérisée en ce que** ledit polymère contient de 0 à 50 % en mole, par rapport au nombre total de moles de monomères qui le constituent, d'un monomère vinylique hydrosoluble non acide, choisi préférentiellement parmi les (méth)acrylamides éventuellement substituées, les (méth)acrylates de polyéthylène glycols, les vinyl éther de polyalkylène glycols, les vinyl sulfoniques, les (méth)acrylates de polyalkylène glycol phosphatés, la vinyl pyrrolidone et leurs mélanges.

5. Utilisation, selon l'une des revendications 1 à 4, **caractérisée en ce que** ledit polymère présente un poids moléculaire compris entre 3 000 g/mole et 150 000 g/mole, préférentiellement entre 7 000 à 30 000 g/mole, très préférentiellement entre 10 000 à 20 000 g/mole.

6. Utilisation, selon l'une des revendications 1 à 5, **caractérisée en ce que** ledit polymère est neutralisé, totalement ou partiellement, par un agent de neutralisation choisi parmi les hydroxydes et / ou oxydes de calcium ou de magnésium, les hydroxydes de sodium, de potassium, de lithium ou l'ammoniaque, ou leurs mélanges, très préférentiellement parmi les hydroxydes et / ou oxydes de calcium, les hydroxydes de sodium et de potassium ou l'ammoniaque, ou leurs mélanges.

7. Utilisation, selon l'une des revendications 1 à 6, **caractérisée en ce que** ledit polymère est mis en oeuvre à raison de 0,1 % à 1,5 %, préférentiellement de 0,3 % à 1,0 % en poids sec dudit polymère par rapport au poids sec de matières minérales.

8. Utilisation, selon l'une des revendications 1 à 7, **caractérisée en ce que** ledit polymère est dilué en solution dans l'eau, cette solution contenant entre 20 % et 60 %, préférentiellement entre 30 et 50 % de poids sec dudit polymère par rapport à son poids total.

9. Utilisation, selon l'une des revendications 1 à 8, **caractérisée en ce que** lesdites matières minérales sont choisies parmi le carbonate de calcium naturel ou synthétique, les dolomies, le kaolin, le talc, le gypse, la chaux, la magnésie, le dioxyde de titane, le blanc satin, le trioxyde d'aluminium ou encore le trihydroxyde d'aluminium, les silices, le mica et le mélange de ces charges entre elles, comme les mélanges talc-carbonate de calcium, carbonate de calcium-kaolin, ou encore les mélanges de carbonate de calcium avec le trihydroxyde d'aluminium ou le trioxyde d'aluminium, ou encore les mélanges avec des fibres synthétiques ou naturelles ou encore les co-structures des minéraux comme les co-structures talc-carbonate de calcium ou talc-dioxyde de titane, ou leurs mélanges, et **en ce que** lesdites matières minérales sont choisies préférentiellement parmi le carbonate de calcium naturel ou synthétique ou le talc ou leurs mélanges, et **en ce qu'**elles sont très préférentiellement choisies parmi le carbonate de calcium naturel ou synthétique ou leurs mélanges.

## Patentansprüche

1. Verwendung, in einem Verfahren zur Herstellung einer wässrigen Dispersion und / oder Suspension mineralischer Stoffe, welches Folgendes aufweist:
a) einen Schritt der Zerkleinerung mineralischer Stoffe in einem wässrigen Milieu, ohne Verwendung von Dispergiermitteln und / oder Mahlhilfsmitteln, wobei der trockengewichtsmäßige Prozentanteil an mineralischen Stoffen weniger als 50 %, vorzugsweise als 40 %, mit starkem Vorzug als 35 %, des Gewichts ausmacht,
b) anschließend einen Schritt der mechanischen und / oder thermischen Konzentration, der dazu dient, wässrige Dispersionen und / oder Suspensionen von mineralischen Stoffen zu erhalten, wobei der trockengewichtsmäßige Prozentanteil an mineralischen Stoffen mehr als 55 %, vorzugsweise mehr als 60 %, mit starkem Vorzug mehr als 65 %, des Gewichts ausmacht,
mindestens eines Polymers, das mindestens ein Monomer enthält, welches aus Acrylsäure oder Methacrylsäure oder deren Mischungen ausgewählt ist, sowie mindestens ein Monomer, bei dem es sich um Maleinsäureanhydrid handelt, wobei das Polymer **dadurch gekennzeichnet ist, dass** das Molverhältnis r (Acryl- und / oder Methacrylsäure) : (Maleinsäureanhydrid) streng im Bereich von 1,9 : 1 bis 1 : 1 liegt, und dadurch, dass das Polymer als Dispergiermittel eingesetzt wird und zwischen Schritt a) und Schritt b) und /oder während des Schrittes b) und / oder während und nach dem Schritt b) zugesetzt wird.

2. Verwendung nach Anspruch 1, **dadurch gekennzeichnet, dass** das Molverhältnis r (Acryl- und / oder Methacrylsäure) : (Maleinsäureanhydrid) im Bereich von 1,5 : 1 bis 1,3 : 1 liegt.

3. Verwendung nach einem der Ansprüche 1 oder 2, **dadurch gekennzeichnet, dass** das Polymer möglicherweise mindestens ein weiteres Monomer enthält, bei welchem es sich um ein wasserlösliches Vinylmonomer ohne Säureeigenschaften handelt, wobei es vorzugsweise aus den möglicherweise substituierten (Meth)acrylamiden, den (Meth)acrylaten von Polyethylenglykolen, den Vinylethern von Polyalkylenglykolen, den sulfonsäurehaltigen Vinylverbindungen, den phosphathaltigem (Meth)acrylaten von Polyalkylenglykol, Vinylpyrrolidon und deren Mischungen ausgewählt ist.

4. Verwendung nach Anspruch 3, **dadurch gekennzeichnet, dass** das Polymer 0 bis 50 mol-%, bezogen auf die Gesamtmolzahl der Monomere, aus denen es besteht, eines wasserlöslichen Vinylmonomers ohne Säureeigenschaften enthält, welches vorzugsweise aus den möglicherweise substituierten (Meth)acrylamiden, den (Meth)acrylaten von Polyethylenglykolen, den Vinylethern von Polyethylenglykolen, den sulfonsäurehaltigen Vinylverbindungen, den phosphathaltigen (Meth)acrylaten von Polyalkylenglykol, Vinylpyrrolidon und deren Mischungen ausgewählt ist.

5. Verwendung nach einem der Ansprüche 1 bis 4, **dadurch gekennzeichnet, dass** das Polymer ein Molekulargewicht im Bereich von 3.000 g/mol bis 150.000 g/mol, vorzugsweise von 7.000 g/mol bis 30.000 g/mol, mit starkem Vorzug von 10.000 bis 20.000 g/mol, aufweist.

6. Verwendung nach einem der Ansprüche 1 bis 5, **dadurch gekennzeichnet, dass** das Polymer vollständig oder teilweise neutralisiert ist, und zwar mit einem Neutralisierungsmittel, das aus den Hydroxiden und/oder Oxiden von Calcium oder von Magnesium, aus den Hydroxiden von Natrium, von Kalium, von Lithium oder aus Ammoniumhydroxidlösung, mit starkem Vorzug aus den Hydroxiden und / oder Oxiden von Calcium, aus den Hydroxiden von Natrium und von Kalium oder aus Ammoniumhydroxidlösung, oder aus deren Mischungen ausgewählt ist.

7. Verwendung nach einem der Ansprüche 1 bis 6, **dadurch gekennzeichnet, dass** das Polymer zu einem Anteil von 0,1 % bis 1,5 %, vorzugsweise von 0,3 % bis 1,0 %, an Trockengewicht des Polymers eingesetzt wird, bezogen auf das Trockengewicht an mineralischen Stoffen.

8. Verwendung nach einem der Ansprüche 1 bis 7, **dadurch gekennzeichnet, dass** das Polymer zur Verdünnung in Wasser gelöst wird, wobei diese Lösung zwischen 20 % und 60 %, vorzugsweise zwischen 30 % und 50 %, an Trockengewicht des Polymers enthält, bezogen auf ihr Gesamtgewicht..

9. Verwendung nach einem der Ansprüche 1 bis 8, **dadurch gekennzeichnet, dass** die mineralischen Stoffe aus natürlichem oder synthetischem Calciumcarbonat, Dolomitstoffen, Kaolin, Talk, Gips, Baukalk, Magnesia, Titandioxid, Satinweiß, Aluminiumtrioxid oder auch Aluminiumtrihydroxid, den Siliziumdioxiden, Glimmer und Mischungen dieser Füllstoffe miteinander, wie etwa den Mischungen Talk-Calciumcarbonat, Calciumcarbonat-Kaolin, oder auch den Mischungen von Calciumcarbonat mit Aluminiumtrihydroxid oder Aluminiumtrioxid, oder auch den Mischungen mit synthetischen oder natürlichen Fasern oder auch den mineralischen Doppelstrukturen wie den Talk-Calciumcarbonat- oder Talk-Titandioxid-Doppelstrukturen oder deren Mischungen ausgewählt sind, und dadurch, dass die mineralischen Stoffe vorzugsweise aus natürlichem oder synthetischem Calciumcarbonat oder Talk oder deren Mischungen ausgewählt sind, und dadurch, dass sie mit starkem Vorzug aus natürlichem oder synthetischem Calciumcarbonat oder deren Mischungen ausgewählt sind.

## Claims

1. Use in a production method of aqueous dispersion and / or suspension of mineral materials including:
a) a grinding stage for mineral materials in an aqueous medium without the use of dispersing agent and / or grinding aid agent and with a percentage of mineral materials dry weight lower than 50%, preferably lower than 40%, very preferably lower than 35% of its weight,
b) then a mechanical and / or thermal concentration stage, with a view to obtaining aqueous dispersions and / or suspensions of mineral materials with a percentage of mineral materials dry weight greater than 55%, preferably greater than 60%, very preferably greater than 65% of its weight,
at least one polymer containing at least one monomer chosen from acrylic acid or methacrylic acid or mixtures thereof and at least one monomer which is maleic anhydride, said polymer being **characterised in that** the molar ratio r (acrylic and / or methacrylic acid): (maleic anhydride) is strictly between 1.9:1 and 1:1, and **in that** said polymer is used as a dispersing agent and is introduced between stage a) and stage b), and / or during stage b), and / or during and after stage b).

2. Use according to claim 1, **characterised in that** the molar ratio r (acrylic and / or methacrylic acid): (maleic anhydride) is between 1.5:1 and 1.3:1.

3. Use according to one of claims 1 or 2, **characterised in that** said polymer may contain at least one other monomer, which is a non-acidic water soluble vinyl monomer, chosen preferably from (meth)acrylamides which may be substituted, polyethylene glycol (meth)acrylates, polyalkylene glycol vinyl ethers, sulphonic vinyl, phosphate (meth)acrylates of polyalkylene glycol, vinyl pyrrolidone and mixtures thereof.

4. Use according to claim 3, **characterised in that** said polymer contains from 0 to 50% in moles, in relation to the total number of monomer moles it contains, of a non-acidic water soluble vinyl monomer, chosen preferably from (meth)acrylamides which may be substituted, polyethylene glycol (meth)acrylates, polyalkylene glycol vinyl ethers, sulphonic vinyl, phosphate (meth)acrylates of polyalkylene glycol, vinyl pyrrolidone and mixtures thereof.

5. Use according to one of claims 1 to 4, **characterised in that** said polymer has a molecular weight of between 3,000 g/mole and 150,000 g/mole, preferably between 7,000 and 30,000 g/mole, very preferably between 10,000 and 20,000 g/mole.

6. Use according to one of claims 1 to 5, **characterised in that** said polymer is neutralised, totally or partially, by a neutralisation agent chosen from calcium or magnesium hydroxides and / or oxides, sodium, potassium, lithium hydroxides or ammonia, or mixtures thereof, very preferably from calcium hydroxides and / or oxides, sodium and potassium hydroxides or ammonia, or mixtures thereof.

7. Use according to one of claims 1 to 6, **characterised in that** said polymer is used at 0.1% to 1.5%, preferably 0.3% to 1.0% in dry weight of said polymer in relation to the dry weight of mineral materials.

8. Use according to one of claims 1 to 7, **characterised in that** said polymer is diluted in solution in the water, with this solution containing between 20% and 60%, preferably between 30% and 50% in dry weight of said polymer in relation to its total weight.

9. Use according to one of claims 1 to 8, **characterised in that** said mineral materials are chosen from natural or synthetic calcium carbonate, dolomites, kaolinite, talc, gypsum, lime, magnesia, titanium dioxide, satin white, aluminium trioxide or aluminium trihydroxide, silicas, mica and the mixture of these charges, such as mixtures of talc-calcium carbonate, calcium carbonate-kaolinite, or mixtures of calcium carbonate with aluminium trihydroxide or aluminium trioxide, or mixtures with synthetic or natural fibres, or co-structures of minerals such as talc-calcium carbonate or talc-titanium dioxide co-structures, or mixtures thereof, and **in that** said mineral materials are chosen preferably from natural or synthetic calcium carbonate or talc or mixtures thereof, and **in that** they are very preferably chosen from natural or synthetic calcium carbonate or mixtures thereof.
